# EUROPÄISCHE PATENTSCHRIFT

(11) **EP 3 152 427 B1**
(45) Veröffentlichungstag und Bekanntmachung des Hinweises auf die Patenterteilung: **25.03.2020**
(21) Anmeldenummer: 15728439.9
(22) Anmeldetag: 27.05.2015
(51) Int. Cl.: F02B 37/10, F02B 39/10, F02C 6/12, F02C 7/143, H02K 1/20, H02K 5/128, H02K 1/14, H02K 7/14, H02K 9/06

(54) **TURBOLADER MIT ELEKTRISCHER MASCHINE**
TURBOCHARGER HAVING AN ELECTRIC MACHINE
TURBOCOMPRESSEUR AVEC MACHINE ÉLECTRIQUE

(30) Priorität: 03.06.2014 DE 102014210451
(43) Veröffentlichungstag der Anmeldung: 12.04.2017
(73) Patentinhaber: Robert Bosch GmbH, 70442 Stuttgart (DE)
(72) Erfinder: BAEUERLE, Michael, 71735 Eberdingen (DE); NAU, Michael, 72175 Dornhan/Aischfeld (DE); IMMENDOERFER, Ingo, 71732 Tamm (DE)
(86) Internationale Anmeldenummer: PCT/EP2015/061680
(87) Internationale Veröffentlichungsnummer: WO 2015/185407

(56) Entgegenhaltungen:
- EP-A1- 1 338 401
- EP-A2- 2 072 824
- WO-A1-2011/014934
- DE-A1-102013 109 136
- DE-C- 362 179
- GB-A- 2 505 454
- KR-A- 20060 010 221
- US-A1- 2011 076 166

## Beschreibung

Die Maschine betrifft einen Turbolader, insbesondere für ein Kraftfahrzeug, mit einem Verdichter, der ein auf einer drehbar gelagerten Welle angeordnetes Verdichterrad aufweist, wobei in einem Rohrabschnitt eines axialen Verdichtereinlass eine elektrische Maschine angeordnet ist, die einen auf der Welle angeordneten Rotor und einen an dem Rohrabschnitt angeordneten Stator aufweist.

### Stand der Technik

Turbolader der Eingangs genannten Art sind aus dem Stand der Technik bekannt. So offenbart beispielsweise die Offenlegungsschrift EP 1 995 426 A1 einen Elektromotor, der in einen Turbolader integriert ist, wobei der Elektromotor einen sogenannten Medienspaltmotor bildet, der zwischen Rotor und Stator eine Medien-Durchlassöffnung bildet und in dem Verdichtereinlass derart angeordnet ist, dass das zu verdichtende Medium durch den Medienspalt zwischen Rotor und Stator geführt wird. Dadurch ist eine besonders kompakte Bauform des Turboladers möglich. Insbesondere wird dadurch erreicht, dass bei Abgasturboladern das Gesamtkonzept des Abgasturboladers zur Integration des Elektromotors im Vergleich zu Lösungen, bei welchen der Elektromotor zwischen Verdichter und Turbine angeordnet ist, nur unwesentlich verändert werden muss.

Ein Nachteil bei der genannten Lösung liegt darin, dass aufgrund des großen Luftspalts zwischen Rotor und Stator sehr starke Permanentmagnete an dem Rotor vorgesehen werden müssen, um die erforderliche Drehmomentcharakteristik der elektrischen Maschine liefern zu können. Dies führt bei der bekannten Lösung zu hohen erforderlichen Strömen und damit zu einem geringen Wirkungsgrad der elektrischen Maschine.

Aus der EP 2 072 824 A2, der US 2011/076166 A1 und der GB 2 505 454 A sind Turbolader bekannt, die einen Verdichter aufweisen, der ein auf einer drehbar gelagerten Welle angeordnetes Verdichterrad aufweist, wobei in einem Rohrabschnitt eines axialen Verdichtereinlasses eine elektrische Maschine angeordnet ist.
Aus der KR 2006 0010221 A und der WO 2011/014934 A1 sind Turbokompressoren mit integrierten elektrischen Maschinen bekannt.

### Offenbarung der Erfindung

Der erfindungsgemäße Turbolader für ein Kraftfahrzeug weist eine Verdichter auf, der ein auf einer drehbar gelagerten Welle angeordnetes Verdichterrad aufweist, wobei in einem Rohrabschnitt eines axialen Verdichtereinlasses eine elektrische Maschine angeordnet ist, die einen auf der Welle angeordneten Rotor und einen an dem Rohrabschnitt angeordneten Stator aufweist, wobei der Stator mehrere gleichmäßig über den Umfang verteilt angeordnete und sich zumindest im Wesentlichen axial erstreckende, bezogen auf die Axialerstreckung der Welle, radial nach innen vorstehende Stege aufweist, die als Teil eines Statorkerns des Stators ausgeführt sind und zur Bildung von sich zumindest im Wesentlichen axial erstreckenden Strömungskanälen beabstandet zueinander angeordnet sind, wobei der Stator im Bereich der Stege mit zumindest einer Wicklung versehen ist, die den jeweiligen Strömungskanal nur teilweise ausfüllt, wobei die Stege aus einem ferromagnetischen Material gefertigt sind. Erfindungsgemäß ist vorgesehen, dass die Stege aerodynamisch profiliert sind und ein tropfenförmiges Profil aufweisen, das in Axialerstreckung ausgebildet ist.
Der erfindungsgemäße Turbolader mit den Merkmalen des Anspruchs 1 hat den Vorteil, dass der wirksame Luftspalt zwischen Rotor und Stator reduziert wird, wobei auch die erforderliche Statordurchflutung verkleinert beziehungsweise schwächer ausgeführt werden kann und der Wirkungsgrad der elektrischen Maschine deutlich erhöht wird. Durch die nach innen weisenden beziehungsweise vorstehenden Stege wird der Magnetfluss optimiert, wobei zwischen den Stegen das zu verdichtende Medium weiterhin mit nur geringen Strömungsverlusten geführt wird. Gleichzeitig wird der Stator durch die von dem Medium umströmten Stege im Betrieb auch sehr gut gekühlt. Der Stator weist mehrere über den Umfang verteilt angeordnete und sich zumindest im Wesentlichen axial erstreckende, nach innen vorstehende Stege auf, die zur Bildung von sich zumindest im Wesentlichen axial erstreckenden Strömungskanälen beabstandet zueinander angeordnet sind. Zwischen den Stegen entstehen somit die Strömungskanäle, die zum Führen und Leiten des zu verdichtenden Mediums dienen. Die Strömungskanäle sind dabei insbesondere randoffen in Richtung des Rotors ausgebildet. Die Anzahl und Ausbildung der Stege ergibt sich aus einer strömungsoptimierten Auslegung und einer magnetflussoptimierten Auslegung. Dabei ist insbesondere vorgesehen, dass eine Vielzahl von Stegen vorgesehen sind, die radial einen verhältnismäßig großen Abstand, der zumindest der Radialerstreckung der Stege entspricht, zu dem Rotor aufweisen, oder dass wenige Stege vorgesehen sind, die jedoch bis nah an den Rotor herangeführt sind.

Ferner ist vorgesehen, dass die Stege aus einem ferromagnetischen Material gefertigt sind. Beispielsweise können die Stege aus Dynamoblech gefertigt sein. Das Statormagnetfeld leitet dadurch etwa 3000 mal besser als Luft. Dadurch können dem Rotor zugeordnete Permanentmagnete im Vergleich zu bekannten Lösungen kleiner oder weniger stark ausgeführt sein, bei gleichbleibender Leistung des Elektromotors beziehungsweise der elektrischen Maschine.

Weiter ist vorgesehen, dass der Stator in dem Bereich der Stege mit wenigstens einer Wicklung versehen ist, die den jeweiligen Strömungskanal nur teilweise ausfüllt. Ist dem Stator also auch im Bereich der Stege eine Wicklung zugeordnet, so füllt diese den jeweiligen Strömungskanal zwischen benachbarten Stegen nur teilweise aus, so dass stets ein ausreichender Durchströmungsquerschnitt für das zu verdichtende Medium freigehalten beziehungsweise zur Verfügung gestellt wird. Die zwischen den Stegen befindliche Wicklung wird dabei dann auch von dem Medienstrom gekühlt, wodurch der Wirkungsgrad der elektrischen Maschine beziehungsweise des Turboladers weiter verbessert wird.

Die Stege weisen ein strömungsoptimiertes, insbesondere ein tropfenförmiges Profil auf. Das Tropfenprofil ist in Axialerstreckung ausgebildet, so dass die Stege den Medienstrom möglichst geringfügig beeinträchtigen.

Gemäß einer vorteilhaften Weiterbildung der Erfindung ist vorgesehen, dass der Turbolader als Abgasturbolader ausgebildet ist und dazu eine Turbine mit einem drehbar gelagerten Turbinenrad aufweist, das mit dem Verdichterrad durch die Welle wirkverbunden ist. Abgasturbolader sind grundsätzlich bekannt. Durch die vorteilhafte Ausbildung des hier beschriebenen Turboladers erfolgt die Integration des Elektromotors ohne dass große Änderungen an dem Abgasturbolader durchgeführt werden müssten, wobei ein hoher Wirkungsgrad des Abgasturboladers, insbesondere der elektrischen Maschine, durch die erfindungsgemäße Ausbildung gewährleistet ist. Die Turbine und das Verdichterrad sind dabei gemäß einer ersten Ausführungsform drehfest miteinander verbunden, so dass durch Betreiben der elektrischen Maschine auch die Turbine angetrieben wird. Entsprechend kann die Turbine auch die elektrische Maschine beispielsweise generatorisch antreiben, um elektrische Energie zu erzeugen.

Gemäß einer besonders bevorzugten Ausführungsform der Erfindung ist vorgesehen, dass das Verdichterrad und das Turbinenrad durch eine Freilaufkupplung miteinander verbunden sind, die es erlaubt, dass das Verdichterrad das Turbinenrad überholt. Es ist hierbei also vorgesehen, dass Turbinenrad und Verdichterrad in eine Drehrichtung nicht drehfest miteinander verbunden sind. Insbesondere ist es durch die Freilaufkupplung möglich, dass das Verdichterrad unabhängig von dem Turbinenrad durch die elektrische Maschine antreibbar ist. Dadurch ist die auf die elektrische Maschine wirkende Last beim elektrischen Antrieb verringert. Insbesondere die Trägheitslast wird durch die Freilaufkupplung um etwa zwei Drittel verringert, da nur noch das in der Regel wesentlich leichtere Verdichterrad, nicht aber das schwere beziehungsweise träge Turbinenrad, beschleunigt werden muss. Dadurch wird auch ein verbessertes dynamisches Ansprechverhalten des Abgasturboladers im Vergleich zu bekannten Lösungen erzielt.

Im Folgenden soll die Erfindung anhand der Zeichnung näher erläutert werden. Dazu zeigen:
- Figur 1: eine Längsschnittdarstellung eines Abgasturboladers,
- Figur 2: ein erstes Ausführungsbeispiel des Abgasturboladers in einer Querschnittdarstellung und
- Figur 3: ein zweites Ausführungsbeispiel des Abgasturboladers in einer Querschnittdarstellung.

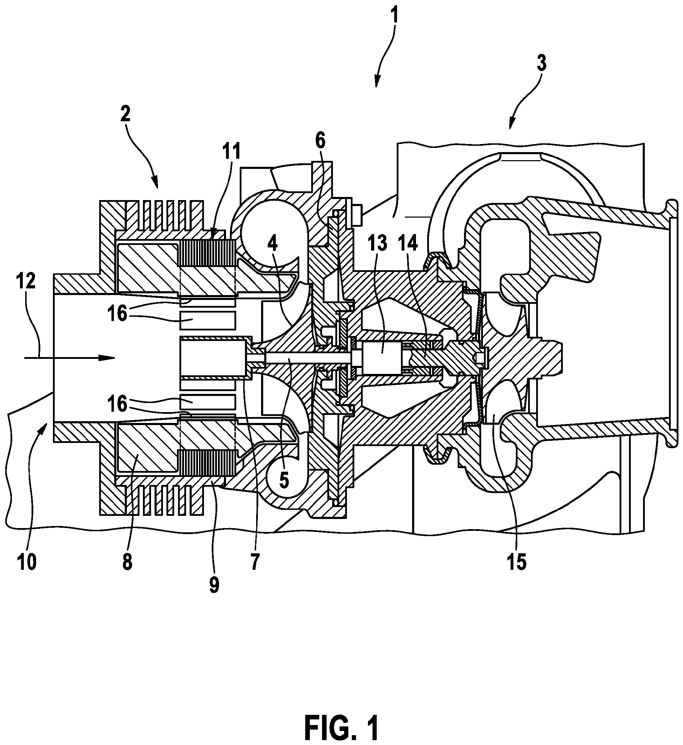

Figur 1 zeigt in einer vereinfachten Längsschnittdarstellung einen Abgasturbolader 1, der einen Verdichter 2 und eine Turbine 3 aufweist, die miteinander wirkverbunden sind. Der Verdichter 2 weist ein Verdichterrad 4 auf, das drehfest auf einer Welle 5 angeordnet ist. Die Welle 5 ist drehbar in einem mehrteiligen Gehäuse 6 des Abgasturboladers 1 gelagert. Auf dem dem Verdichterrad 5 zugeordneten freien Wellenende der Welle 5 ist ein Rotor 7 angeordnet, der einen oder mehrere Permanentmagnete (hier nicht einzeln dargestellt) trägt. Dem Rotor ist ein Stator 8 zugeordnet, der an einem Rohrabschnitt 9, der einen Verdichtereinlass 10 bildet, angeordnet. Der Rotor 7 und der Stator 8 bilden zusammen eine elektrische Maschine 11, die in dem Rohrabschnitt 9 beziehungsweise in dem Ventileinlass 10 angeordnet ist, und insbesondere zum Antreiben der Welle 5 und damit zum Antreiben des Verdichterrads 4 dient. Die elektrische Maschine 11 ist dabei als Medienspaltmaschine ausgebildet, die sich dadurch auszeichnet, dass zwischen dem Rotor 9 und dem Stator 8 ein ringförmiger Durchströmungsspalt für das zu verdichtende Medium besteht. Der Innendurchmesser des Stators 8 ist somit größer als der Außendurchmesser des Rotors 7. Das zu verdichtende Medium, das durch den Verdichtereinlass 10 gemäß Pfeil 12 einströmt, strömt somit durch die elektrische Maschine 11 zu dem Verdichterrad 4.

Die Welle 5 ist auf der dem Rotor 7 gegenüberliegenden Seite des Verdichterrads 4 durch eine Freilaufkupplung 13, die hier nur vereinfacht dargestellt ist, mit einer Turbinenwelle 14 gekoppelt, welche ein Turbinenrad 15 der Turbine 3 trägt. Die Freilaufkupplung 13 ist derart ausgebildet, dass sie ein Antreiben des Verdichterrads 4 durch die elektrische Maschine 11 unabhängig von dem Turbinenrad 15 erlaubt. Durch die Freilaufkupplung 13 ist es somit möglich, dass das Verdichterrad 4 das Turbinenrad 15 überholt beziehungsweise mit einer höheren Drehzahl betrieben wird als das Turbinenrad 15. Sofern das Verdichterrad 4 ausläuft oder von der elektrischen Maschine angetrieben wird, ist seine Bewegung von der des Turbinenrads 15 entkoppelt, wodurch das Trägheitsmoment des Turbinenrads 15 ebenfalls abgekoppelt ist und dadurch eine deutlich erhöhte Winkelbeschleunigung der elektrischen Maschine 11 erzielbar ist.

Die elektrische Maschine 11 weist an dem Stator 8 mehrere über den Umfang des Stators 8 gleichmäßig verteilt angeordnete Stege 16 auf, die sich axial - bezogen auf die Axialerstreckung der Welle 5 - an der Statorinnenseite beziehungsweise radial nach innen ragend erstrecken. Zwischen den benachbarten Stegen 16 werden somit Freiräume gebildet, die Strömungskanäle 17 darstellen, die entsprechen der Axialerstreckung der Stege sich auch axial erstrecken.

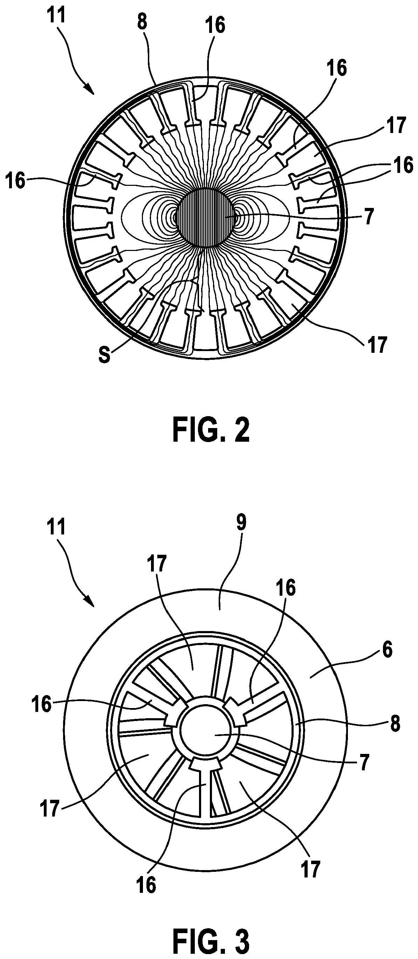

Figur 2 zeigt hierzu ein erstes Ausführungsbeispiel der elektrischen Maschine 11 des Abgasturboladers 1 in einer Querschnittdarstellung durch den Rotor 7 und den Stator 8, mit eingezeichneten Magnetfeldkennlinien. Gemäß diesem Ausführungsbeispiel ist eine Vielzahl von Stegen 16 vorgesehen, von denen aus Übersichtlichkeitsgründen vorliegend nur einige mit Bezugszeichen versehen sind. Zwischen jeweils zwei benachbarten Stegen 16 ist jeweils einer der bereits genannten Strömungskanäle 17 ausgebildet. Die Stege 16 enden radial beabstandet zu dem Rotor 7, wodurch sich ein Spalt S zwischen Rotor 7 und Stator 8 ergibt, der zusätzlich zu den zu dem Rotor 7 hin randoffenen Strömungskanälen 17 von dem zu verdichtenden Medium durchströmbar ist.

Figur 3 zeigt ein zweites Ausführungsbeispiel der elektrischen Maschine 11, ebenfalls in einer Querschnittdarstellung, das sich von dem vorhergehenden Ausführungsbeispiel dadurch unterscheidet, dass die Anzahl der Stege 16 sehr viel geringer gewählt ist, wobei die verbleibenden Stege 16 dafür einen sehr viel kleineren geringeren radialen Abstand beziehungsweise Spalt zu dem Rotor 7 aufweisen. Die Stege 16 ragen somit radial weiter nach innen in Richtung des Rotors 7 in den Rohrabschnitt 9 hinein. Die beiden Ausführungsbeispiele haben gemeinsam, dass der freie Durchströmungsquerschnitt für das zu verdichtende Medium, insbesondere Frischluft, gleich ist.

Der hier vorgestellte Abgasturbolader 1 hat den Vorteil, dass ein geringerer Stromverbrauch zum Betreiben der elektrischen Maschine 11 bei gleichbleibender Leistung im Vergleich zu bekannten Lösungen notwendig ist.

Durch die Integration der Stege 16 oder auch Statorzähne aus ferromagnetischem Material, wie beispielsweise Dynamoblech, wird das Statormagnetfeld sehr viel besser geleitet als bisher. Zwischen den Stegen 16 strömt die Ansaugluft des Verdichters 2, gegebenenfalls mit Abgasanteilen aufgrund einer Abgasrückführung, wodurch der Stator 8 außerdem sehr gut gekühlt wird. Zur Reduzierung der Strömungsverluste und gegebenenfalls der Verbesserung des Verdichterpumpenverhaltens werden die Stege aerodynamisch profiliert und imit einer Tropfenform versehen. Vorzugsweise werden die Stege 16 auch bezüglich ihres Eisenquerschnitts optimiert (Verhältnis Eisenquerschnitt zu Luftquerschnitt). Durch die Stege 16 wird der wirksame Luftspalt zwischen Rotor 7 und Stator 8 reduziert, wodurch der oder die Permanentmagnete am Rotor 7 und die erforderliche Statordurchflutung verkleinert beziehungsweise reduziert werden, womit der Wirkungsgrad der elektrischen Maschine 11 gesteigert wird. Die Freilaufkupplung 13 entlastet die elektrische Maschine 11, da diese nur noch das im Vergleich leichtere Verdichterrad 4 antreiben muss, nicht aber das schwere und damit trägere Turbinenrad 15. Dadurch wird mit der insbesondere begrenzten elektrischen Bordnetzenergie eines Kraftfahrzeugs, das mit dem entsprechenden Abgasturbolader versehen ist, ein erheblich verbessertes dynamisches Ansprechverhalten des elektrisch betreibbaren Abgasturboladers 1 erzielt.

Mit einer im Vergleich zu bekannten Lösungen identischen Magnetausstattung/- Leistung nimmt der magnetische Fluss durch die vorgeschlagene Lösung im Luftspalt um etwa 30 % bis etwa 300 % geometrieabhängig zu. Bei leistungsgleicher elektrischer Maschine 11 wird dann um denselben Faktor weniger magnetische Durchflutung benötigt, d.h. die erforderliche Windungszahl, Motorlänge und/oder Stromstärke nehmen entsprechend der elektromagnetischen Auslegung ab. Damit werden auch Wirkungsgrad und Maschinenausnutzung (Leistung zu Motorvolumen) gesteigert.

Die Form der Stege 16, insbesondere im Querschnitt gesehen, kann heute mit geschichteten Elektroblechen dreidimensional ausgeführt werden, um aerodynamisch optimiert zu sein beziehungsweise nur geringe Strömungsverluste in der zu verdichtenden Luft zu bewirken. Durch die aerodynamisch geformten Stege 16 wird die sogenannte pneumatische Pumpgrenze des Verdichters 2 hin zu kleineren Luftströmungen bei größeren Drücken verschoben, wodurch der Verdichter 2 leistungsfähiger wird und auch höhere Arbeitspunkte ohne raumaufwändige Geometrieveränderungen ermöglicht. Das zu verdichtende Medium beziehungsweise die Luft strömt durch den Spalt der elektrischen Maschine 11 und kühlt dabei sowohl Rotor als auch Stator. Die radial nach innen ragenden beziehungsweise vorstehenden Stege 16 beziehungsweise Statorzähne wirken zudem als Kühlkörper für den Stator 8, so dass eine Verlustwärme des Stators 8 noch besser an die zu verdichtende Luft abgeführt werden kann.

Weiterhin ist es auch denkbar, eine Statorwicklung im Bereich der Stege 16 vorzusehen, die die Durchströmungskanäle 17 jedoch nur teilweise ausfüllt, so dass auch weiterhin ein Durchströmen der elektrischen Maschine 11 mit einem möglichst großen Durchströmungsquerschnitt gewährleistet ist. Durch das Vorsehen einer oder mehrerer Wicklungen im Bereich der Stege 16 werden auch diese gekühlt und das Verhalten der elektrischen Maschine 11 weiter optimiert. Weiterhin wird die magnetische Streuung reduziert, da elektrische und permanent erregte Durchflutungen räumlich dichter beieinander liegen, und dabei ein geringerer Anteil der Durchflutungen nicht mit Rotor 7 und Stator 8 verkoppelt sind.

Insgesamt ist der Abgasturbolader 1 damit vergleichbar mit einem Abgasturbolader, der einen zusätzlichen elektrisch antreibbaren Zusatzverdichter aufweist. Durch die beschriebene Ausbildung wird eine vergleichbare Dynamik der Verdichterstufe erreicht, wobei durch die Integration der elektrischen Maschine 11 in den Verdichter 2 vorhandene Bauteile des Abgasturboladers 1 mitbenutzt werden können, insbesondere in Bezug auf Lagerung, Gehäuse, Verschlauchung und Kühlung. Eine für die elektrische Maschine 11 notwendige Elektronik lässt sich flexibel beziehungsweise auf einfache Art und Weise an dem Gehäuse 6 des Abgasturboladers 1 anbringen, insbesondere anflanschen, oder in der Nähe dazu anordnen, um keine zu große Einzelkomponente zu erzeugen.

Der Abgasturbolader 1 eignet sich insbesondere zur Verwendung in einem Kraftfahrzeug, das eine Brennkraftmaschine als Antriebseinrichtung aufweist.

## Patentansprüche

1. Turbolader (1) für ein Kraftfahrzeug, mit einem Verdichter (2), der ein auf einer drehbar gelagerten Welle (5) angeordnetes Verdichterrad (4) aufweist, wobei in einem Rohrabschnitt (9) eines axialen Verdichtereinlasses (10) eine elektrische Maschine (11) angeordnet ist, die einen auf der Welle (5) angeordneten Rotor (7) und einen an dem Rohrabschnitt (9) angeordneten Stator (8) aufweist, wobei der Stator (8) mehrere gleichmäßig über den Umfang verteilt angeordnete und sich zumindest im Wesentlichen axial erstreckende, bezogen auf die Axialerstreckung der Welle (5), radial nach innen vorstehende Stege (16) aufweist, die als Teil eines Statorkerns des Stators (8) ausgeführt sind und zur Bildung von sich zumindest im Wesentlichen axial erstreckenden Strömungskanälen (17) beabstandet zueinander angeordnet sind, wobei der Stator (8) im Bereich der Stege (16) mit zumindest einer Wicklung versehen ist, die den jeweiligen Strömungskanal (17) nur teilweise ausfüllt, wobei die Stege (16) aus einem ferromagnetischen Material gefertigt sind, **dadurch gekennzeichnet, dass** die Stege (16) aerodynamisch profiliert sind und ein tropfenförmiges Profil aufweisen, das in Axialerstreckung ausgebildet ist.

2. Turbolader nach einem der vorhergehenden Ansprüche, **dadurch gekennzeichnet, dass** der Turbolader (1) als Abgasturbolader ausgebildet ist und eine Turbine (3) mit einem drehbar gelagerten Turbinenrad (15) aufweist, das mit dem Verdichterrad (4) durch die Welle (5) wirkverbunden ist.

3. Turbolader nach einem der vorhergehenden Ansprüche, **dadurch gekennzeichnet, dass** das Verdichterrad (4) und das Turbinenrad (15) durch eine Freilaufkupplung (13) miteinander wirkverbunden sind, die es erlaubt, dass das Verdichterrad (4) das Turbinenrad (5) überholt.

## Claims

1. Turbocharger (1) for a motor vehicle, having a compressor (2) which has a compressor wheel (4) which is disposed on a rotatably mounted shaft (5), wherein an electric machine (11) is disposed in a tubular portion (9) of an axial compressor inlet (10), said electric machine (11) having a rotor (7) disposed on the shaft (5) and a stator (8) disposed on the tubular portion (9), wherein the stator (8) has a plurality of webs (16) which are disposed so as to be distributed uniformly across the circumference, extend in an at least substantially axial manner and project radially inward in terms of the axial extent of the shaft (5) and which are embodied as part of a stator core of the stator (8) and for forming flow ducts (17) which extend in an at least substantially axial manner are disposed so as to be mutually spaced apart, wherein the stator (8) in the region of the webs (16) is provided with at least one coil which only partially fills the respective flow duct (17), wherein the webs (16) are made from a ferromagnetic material, **characterized in that** the webs (16) are aerodynamically profiled and have a teardrop-shaped profile which is configured in the axial extent.

2. Turbocharger according to one of the preceding claims, **characterized in that** the turbocharger (1) is configured as an exhaust-gas turbocharger and has a turbine (3) having a rotatably mounted turbine wheel (15) which is operatively connected to the compressor wheel (4) by way of the shaft (5).

3. Turbocharger according to one of the preceding claims, **characterized in that** the compressor wheel (4) and the turbine wheel (15) are operatively connected to one another by way of a freewheeling clutch (13) which permits the compressor wheel (4) to overrun the turbine wheel (5).

## Revendications

1. Turbocompresseur (1) pour un véhicule automobile, comprenant un compresseur (2) qui présente une roue de compresseur (4) disposée sur un arbre (5) supporté de manière rotative, une machine électrique (11) étant disposée dans une portion de tube (9) d'une entrée axiale (10) du compresseur, laquelle présente un rotor (7) disposé sur l'arbre (5) et un stator (8) disposé sur la portion de tube (9), le stator (8) présentant plusieurs nervures (16) saillant radialement vers l'intérieur, disposées de manière répartie uniformément sur la périphérie et s'étendant au moins essentiellement axialement par rapport à l'étendue axiale de l'arbre (5), lesquelles sont réalisées sous forme de partie d'un noyau statorique du stator (8) et sont disposées à distance les unes des autres pour former des canaux d'écoulement (17) s'étendant au moins essentiellement axialement, le stator (8) étant pourvu d'au moins un enroulement dans la région des nervures (16), lequel remplit seulement en partie le canal d'écoulement respectif (17), les nervures (16) étant fabriquées en un matériau ferromagnétique, **caractérisé en ce que** les nervures (16) sont profilées de manière aérodynamique et présentent un profil en forme de goutte qui est réalisé dans l'étendue axiale.

2. Turbocompresseur selon l'une quelconque des revendications précédentes, **caractérisé en ce que** le turbocompresseur (1) est réalisé sous forme de turbocompresseur à gaz d'échappement et présente une turbine (3) avec une roue de turbine (15) supportée de manière rotative, qui est en liaison fonctionnelle avec la roue de compresseur (4) par le biais de l'arbre (5).

3. Turbocompresseur selon l'une quelconque des revendications précédentes, **caractérisé en ce que** la roue de compresseur (4) et la roue de turbine (15) sont en liaison fonctionnelle l'une avec l'autre par un accouplement de roue libre (13) qui permet à la roue de compresseur (4) de passer sur la roue de turbine (5).
